# EUROPEAN PATENT SPECIFICATION

(11) **EP 3 018 341 B1**
(45) Date of publication and mention of the grant of the patent: **11.04.2018**
(21) Application number: 15189774.1
(22) Date of filing: 14.10.2015
(51) Int. Cl.: F03D 13/10, F03D 15/00, F03D 9/25

(54) **ASSEMBLY STAND FOR ASSEMBLING A GEARBOX UNIT AND A MAIN SHAFT OF A WIND TURBINE**
MONTAGEBOCK ZUR MONTAGE EINER GETRIEBEEINHEIT UND HAUPTSCHAFT EINER WINDTURBINE
SUPPORT D'ASSEMBLAGE PERMETTANT DE JOINDRE UNE UNITÉ BOÎTE DE VITESSES ET UN ARBRE PRINCIPAL D'UNE ÉOLIENNE

(30) Priority: 07.11.2014 DK 201470681
(43) Date of publication of application: 11.05.2016
(73) Proprietor: Envision Energy (Denmark) ApS, 8600 Silkeborg (DK)
(72) Inventor: Westergaard, Jan, 7330 Brande (DK)
(74) Representative: Tellefsen, Jens J.

(56) References cited:
- DE-A1-102007 059 820
- DE-A1-102011 006 665
- DE-A1-102011 013 844
- DE-U1-202004 020 317
- US-A1- 2011 041 624
- US-B1- 7 944 079

## Description

### Field of the Invention

The present invention relates to an assembly stand and a method for assembling a wind turbine main shaft and a wind turbine gear unit.

### Background of the Invention

It is known that the main shaft of large modern wind turbines forms a large and heavy structure since it is designed to transfer the rotational torque generated by the wind loads acting on the rotor unit to the drivetrain in the nacelle. It is typically done via a gearbox. The dimensions of the gearbox have also increased in order to accommodate for the increased size of the main shaft. This makes the main shaft as well as the gear unit difficult to handle during the assembly process.

The main shaft and gearbox are normally assembled by using a press-fit coupling where the interface of the gearbox is heated to a predetermined temperature level. This heating causes the mounting interface/rotor end of the gearbox to expand which in turn allows the gearbox to be guided into position relative to the generator end of the main shaft. Another solution for assembling the main shaft and the gearbox is by using a shrink disc arrangement. In this arrangement, mechanical or hydraulic means are used to clamp the main shaft and a shaft of the gearbox firmly together for transferring moment and torque between the two shafts.

The main shaft and gearbox are normally assembled horizontally by using a crane to guide the gearbox into the correct position onto the main shaft. The use of a press-fit coupling or shrink disc arrangement requires a very precise alignment between the two units in order to avoid any damages. This is a difficult and time consuming process since the movement/rotation of the gearbox is difficult to control when using crane wires. If the contact surfaces of the engaging ends are damaged, such a repair could cost as much as 500,000 to 1 million DKK.

EP 1617075 B1 discloses a support arrangement for replacement of the gearbox in a wind turbine structure. The support arrangement comprises a mainframe substantially placed below the rotor shaft and the gearbox; the mainframe being part of the wind turbine structure. The rotor shaft is rotatably supported by means of a single bearing unit arranged at the rotor end and the gearbox is supported by means of two support units arranged on either side. Each of the three support units is firmly connected to the mainframe. A temporary support unit is mounted to the mainframe at the generator end of the rotor shaft and secured to the rotor shaft by means of clamping elements. The old gearbox is then dismounted and removed. After installation of a new gearbox, the clamping element is released and the support unit is dismounted and removed from the mainframe. US20110041624 discloses an assembly and test unit for the wind turbine gearbox. Two frames are used; one gearbox frame and one test shaft frame. US 7944079 B1 discloses an assembly unit for assembling a gearbox and a rotor shaft on-site wherein the assembly unit is lifted into position over the nacelle and then positioned relative to a mainframe of the nacelle. The rotor shaft is mounted to the mainframe via supporting bearing units wherein the generator end of the rotor shaft is positioned inside an opening for support during the assembly process. The gearbox is mounted to a moveable frame unit which is moved relative to a supporting frame unit mounted to the mainframe via linear actuators. This assembly unit can only be used on-site and requires a crane unit to lift the assembly unit into position in the nacelle. DE 102011013844 A1 discloses a transportation stand for transporting a pre-assembled rotor shaft with gearbox to an installation site. The transportation stand comprises two foldable frame units each with suitable elements for receiving and holding the rotor shaft with the gearbox. These elements are configured to hold the rotor shaft and the gearbox in a fixed position during transport. No adjustment of their respective positions can be performed once they have been loaded into the transportation stand.

### Object of the Invention

An object of this invention is to provide an assembly stand for assembling a wind turbine main shaft and a wind turbine gear unit.

An object of this invention is to provide an assembly stand that reduces the risk of damaging the contact surfaces during assembly and allows for a simpler assembly process.

An object of this invention is to provide an assembly stand that allows for a more accurate and standardised alignment of the two units during the assembly process.

An object of this invention is to provide a quick and simple assembly method for installation of a gear unit onto a main shaft of a wind turbine.

### Description of the Invention

An object of the invention is achieved by an assembly stand for assembling a main shaft unit and a gear unit of a wind turbine, comprising:
- a gear frame unit comprising receiving means configured to receive and hold the gear unit,
- a main shaft frame unit comprising receiving means configured to receive and hold the main shaft unit, where at least one of the two frame units comprises adjustment means configured to move that frame unit relative to the other frame unit in at least one direction,
- alignment means for aligning the positions of the main shaft unit and the gear unit with each other, and
- means for moving one of the main shaft unit or gear unit into contact with the other unit, characterised in that at least the main shaft frame unit or the gear frame unit is arranged on a base frame for positioning relative to a reference surface at ground level and not in the nacelle or on the main frame of the nacelle.

This provides an assembly stand for installation of a gear unit onto a main shaft unit of a wind turbine without the use of external crane units to move the two units into contact with each other. The frame units of the assembly stand allows for a better control of the alignment process as well as the movement of the individual units, thus reducing the risk of the contact surfaces getting damaged during the assembly process. Furthermore, the assembly stand allows the number of man-hours and/or workers to be reduced compared to the conventional assembly method during a crane.

The term "gear unit" refers to any type of gearbox or gear assembly suitable for connecting the rotor shaft with the rest of the drive train of the wind turbine. The gear unit comprises a mounting interface for the rotor shaft, a mounting interface for the drivetrain, e.g. a rotation shaft or high speed shaft thereof, two or more gears, and any other components that make up the gearbox or gear assembly. The term "main shaft" refers to any type of rotor shaft designed to transfer both rotational and torsion forces from the rotor, e.g. the wind turbine blades and hub, to the rest of the nacelle, e.g. the mainframe, the drivetrain and any other components located within the nacelle. The term "main shaft unit" refers to the main shaft outfitted with at least one, preferably two, main bearing(s) and any other components installed on the main shaft.

In a simple embodiment, the two frame units are separate frame units comprising means, e.g. wheels, belts or tracks, configured to move the frame units relative to each other. Other types of means may be used to move the frame units, e.g. rack and pinion. The main shaft frame unit or gear frame unit may be fixed to a reference surface while the other frame unit is able to move relative to the stationary frame unit. This allows the worker or workers to move/handle each frame unit independently, such as when placing the main shaft unit and gear unit in the respective frame units or when moving the main shaft frame unit and the gear frame unit into alignment.

A drive unit, e.g. a motor or actuators, may be arranged on the main shaft frame unit and/or the gear frame unit for moving the respective frame unit and/or adjusting the position or orientation of the respective frame unit. The motor may be an electrical motor or a diesel/gas powered motor connected to the wheels, drive wheels, or pion gears. The actuators, e.g. linear actuators, may be connected to a hydraulic, pneumatic or electrical power unit which controls the operation of the actuators. This allows the worker or workers to move/align each frame unit in a semi-automatic or automatic process. Alternatively, the drive unit may be a mechanical drive unit allowing the alignment and/or movement to be carried out manually by the worker or workers.

According to one embodiment, the base frame comprises mounting means for mounting to the reference surface or support elements for placement on the reference surface.

The main shaft frame unit and the gear frame unit are in a preferred embodiment arranged on a base frame having mounting/support elements, e.g. brackets or feet, for mounting to the reference surface by fastening means (e.g. bolts), or simply by placement on the reference surface. Other mounting means, e.g. glue or welding, may also be used to mount the base frame to the reference surface. The brackets or feet may be adjustable in a vertical direction to allow for adjustment of the height of the assembly stand. Said brackets or feet also enable the assembly stand to compensate for any unevenness or sloping of the reference surface. The base frame may be a common base frame on which both frame units are arranged, or individual base frames for each of the frame unit. The individual base frames may each further comprise another set of mounting elements, e.g. brackets, for mounting the two base frames firmly together. This enables the assembly stand to be firmly fixed to the reference surface so that it does not move by accident during loading or alignment. Furthermore, the base frame or base frames is/are configured to transfer the loads of the main shaft unit and the gear unit to the reference surface to allow for a more rigid structure.

The term "reference surface at ground level" is defined by a ground level, a floor, a bed of a truck or trailer, or another suitable reference surface at or near the ground, and not in the nacelle or on the main frame of the nacelle. Alternatively, the base frame may form an integrated part of the bed of the truck or trailer. This allows the assembly stand to be positioned at a manufacturing or assembly site, or even at the installation site of the wind turbine. This also allows the assembly stand to be moved to different installation sites where the bed may also act as a working platform during the assembly process.

At least one of the frame units, e.g. the main shaft frame unit, is moveable connected to the other frame unit, e.g. the gear frame unit, or the base frame. Optionally, both frame units may be moveable connected to the base frame. This allows the main shaft unit to be moved relative to the gear unit, or vice versa, to align the positions of the two units.

According to one embodiment, the adjustment means are lifting elements connected to the receiving means of at least one of the main shaft frame unit and gear frame unit, e.g. the gear frame unit, wherein the lifting elements are configured to move the main shaft unit or gear unit in at least a vertical direction.

The main shaft frame unit and/or gear frame unit have adjustment means arranged between the receiving means and the base frame thereof. The receiving means may be mounting elements, e.g. brackets or footplates, configured to be mounted to matching mounting elements of the main shaft unit or gear unit. Alternatively, the receiving means may be support elements, e.g. shoes or cups, having a contact surface facing a matching contact surface on the main shaft unit or gear unit. The receiving means may be a combination of mounting elements and support elements depending on the configuration and design of the main shaft unit or gear unit. This allows the main shaft or gear unit to be fixed to the assembly stand by fastening means, e.g. bolts or screws, or at least to be held securely in place to prevent any undesired movements.

At least one of the frame units, e.g. the gear frame unit, comprises at least one set of lifting elements in the form of actuators, e.g. jack-up legs or rods or telescopic lifting columns or cylinders, connected to one or more drive units as described above. The drive units may further be electrically connected to a control unit configured to control the operation of the lifting elements, or simply connected to a manual operated handle or lever. Alternatively, one or more rows of distinctive holes and a pin or mandrel may be used to raise or lower the receiving means. At least two, preferably three, four or five, lifting elements are arranged on the base frame where the lifting elements may be controlled individually, simultaneously or in predetermined groups/pairs. The position and rotation of the gear unit can be controlled more accurately if the lifting elements are controlled in groups/pairs or individually. This allows the respective unit, e.g. the gear unit, to be moved in a vertical direction relative to the horizontal plane defined by the assembly stand, the vertical direction being perpendicular to a longitudinal direction and a transverse direction of the assembly stand which define the horizontal plane.

The width and/or length between the lifting elements on the base frame correspond to the width and/or length of the matching mounting elements of the main shaft unit or gear unit. This allows the size of the frame unit/base frame to be adapted to fit a predetermined type of wind turbine (defined by its MW capacity and/or model). In an alternative embodiment, the base frame may further comprise means for adjusting the width and/or length between the lifting elements, such as rows of distinctive holes and pins or mandrel, or two or more distinctive mounting or support elements each adapted to fit a predetermined type of wind turbine. Alternatively, extensions or adaptor pieces may be used to adjust the width and/or length between the lifting elements, as well as the height of the lifting elements/receiving means.

According to one embodiment, the adjustment means are sliding elements connected to the receiving means of at least one of the main shaft frame unit and gear frame unit, e.g. the main shaft frame unit, wherein the sliding elements are configured to move the main shaft unit or gear unit in at least one horizontal direction.

Alternatively or additionally, at least one of the frame units, e.g. the main shaft frame unit, comprises at least one set of sliding elements, such as linear actuators or a screw mechanism, connected to one or more drive units as described above. The drive units may further be electrically connected to the control unit which is configured to control the operation of the sliding elements. The sliding elements may instead be connected to a manual operated handle, lever or wheel. The sliding elements may be located between the receiving means and a slidable seat on which the receiving means are located, and be configured to move/slide the receiving means in the transverse/sideways direction relative to the longitudinal direction of the assembly stand. Alternatively, the sliding elements may be located between the seat and the base frame, thus allowing the seat and receiving means to be moved together. The position and rotation of the main shaft unit can be controlled more accurately if the sliding elements are controlled in groups/pairs or individually. This allows the respective unit, e.g. the main shaft unit, to be moved sideways relative to the assembly stand.

The seat is moveably connected to the base frame by two or more sliding tracks extending parallel to the longitudinal direction of the assembly stand. In one embodiment, the seat is moved in the longitudinal direction by another set of mechanical operated actuators or hydraulic/pneumatic/electrical operated actuators. The hydraulic/pneumatic/electrical operated actuators may further be connected to the drive unit and controlled by the control unit as described above. The actuators may also be used to move the seat towards its outermost position when it is not loaded. This allows the seat and thus the main shaft to be moved axially relative to the assembly stand without a moveable unit as described later.

In an alternative embodiment, the seat is free to move/slide relative in the longitudinal direction to the base frame. Optionally, one or more spring elements are arranged between the seat and the base frame for pushing the seat towards its outermost position when it is not loaded. This allows the seat and thus the main shaft to be pushed or pulled axially relative to the assembly stand by using a moveable unit as described later.

According to a special embodiment, the assembly stand further comprises at least one locking mechanism configured to lock at least the sliding elements or the lifting elements in one or more predetermined positions.

The lifting elements and/or sliding elements can be locked in either one of the end positions, or any positions there in between, by means of a locking mechanism. The locking mechanism may be located on each of the lifting and sliding elements. Alternatively or additionally, the locking mechanism may be arranged relative to the longitudinal sliding tracks for locking the seat in at least one end position, e.g. an outermost end position. The locking mechanism may be a simple pin-and-hole arrangement, a clamping arrangement, an electrical operated locking unit, or any other type of locking mechanism.

According to one embodiment, the assembly stand further comprises a moveable unit having mounting elements configured to be mounted to matching mounting elements located on one of the main shaft unit and the gear unit, the moveable unit further comprises means for moving one of the units, e.g. the main shaft unit, into contact with the other unit, e.g. the gear unit.

The main shaft unit and the gear unit each comprises a generator end and a rotor end located in opposite ends. The main shaft unit comprises at the rotor end a plurality of primary mounting elements, e.g. bolts, for mounting to matching mounting elements, e.g. bolt holes, located on a rotor hub. Alternatively, separate fastening elements, e.g. bolts and nuts, may be used to mount the main shaft unit to the rotor hub. The gear unit comprises at the generator end similar primary mounting elements for mounting to matching mounting elements located on a generator unit or an intermediate rotation shaft.

The moveable unit is a wagon or cart having three or more wheels for moving the wagon or cart around. The moveable unit comprises a chassis or frame structure on which any number, e.g. at least three, of mounting elements, e.g. bolts or bolt holes, are located for mounting to the rotor end of the main shaft, e.g. to the primary mounting elements or secondary mounting elements located on the rotor end. The moveable unit may instead be mounted to the generator end of the gear unit, e.g. to the primary mounting elements or secondary mounting elements located on the generator end.

At least one linear actuator, e.g. a piston, connected to a hydraulic/pneumatic/electrical drive unit may be arranged on the moveable unit for moving the main shaft unit into contact with the gear unit, or vice versa. Alternatively, a mechanical handle, wheel or lever may be used to operate the actuator. The actuator may comprise a coupling element, e.g. an eye or hook, for the connection of a guide wire or cable. The guide wire/cable may be guided through the main shaft unit and the gear unit, and connected to the generator end of the gear unit or the rotor end of the main shaft unit. A removable bracket may be connected to the other end of the wire/cable and further mounted to the gear unit or the main shaft. The drive unit may be controlled by a separate control unit or the control unit as described above. This allows the main shaft unit and gear unit to be brought into contact with each other by retracting the actuator, thus tightening the wire/cable.

An external heating unit or a heating unit arranged on the assembly stand may be used to heat up at least the interface of the gear unit, optionally a cooling unit may be used to cool the interface of the main shaft. The on-board heating unit may be electrically connected to the control unit which in turn controls the operation of the heating unit. The configuration and means for positioning the heating elements relative to the interface is well-known to a person skilled in the art and will not be described in details. Alternatively, a shrink disc arrangement may be arranged at or integrated into the gear unit where the shrink disc comprises an inner part having an inner contact surface for contacting an outer surface of the main shaft. The generator end of the main shaft is configured to be positioned over a rotor end of a gear shaft, e.g. a hollow shaft. The contact surfaces are forced into contact with each other by a mechanical or hydraulic operated mechanism located in the shrink disc. The configuration of the shrink disc arrangement is well-known to a person skilled in the art and will not be described in details.

According to one embodiment, the alignment means comprises an alignment source, e.g. an energy source or a telescopic sight, configured to be positioned at or near one end of the main shaft unit or the gear unit, and at least one removable first guiding element configured to be positioned at another end of the main shaft unit or the gear unit, wherein the first guiding element is configured to interact with the alignment source.

The positions and orientation of the main shaft unit and the gear unit are aligned by using a light source, e.g. a laser unit, which is positioned at the generator end of the gear unit. The light source comprises mounting elements for mounting to matching mounting elements located on the respective end. The light source may instead be fixed by using a treated coupling, a snap-coupling, or other known coupling means. The light source is configured to generate a light beam e.g. a laser beam, which is emitted through a hole, e.g. a central hole, of the main shaft unit and the gear unit. The light source may further comprise adjusting means, e.g. adjustment screws, for adjusting the position and/or orientation of the light source. A first guiding element, e.g. a plate or disc, is configured to be positioned at the opposite end of the gear unit, the first guiding element comprising at least one guiding structure, e.g. a cross-hair, a graticule, a dot, a circle or another suitable guiding structure, located at the centre of the element. Alternatively, the light surface may be arranged on a separate unit, e.g. a tripod, which is placed in front of the respective end. In this configuration, another first guiding element may be arranged at that respective end. This allows the first guiding element to act as a calibration element for calibrating the orientation of the light source relative to the orientation of the gear unit.

The light source may be positioned at the rotor end of the main shaft unit instead meaning that the first guiding element is positioned at the opposite end of the main shaft unit. This allows the main shaft unit to be used as a reference instead of the gear unit. Other energy sources may be used to calibrate and align the main shaft unit and the gear unit, such as a sound generator emitting a sound beam that is picked up by a number of microphones placed strategically on the first guiding element.

Alternatively, a telescope in the form of a telescopic sight may be used to calibrate and align the main shaft unit and the gear unit. The telescope may be mounted to the generator end of the gear unit or to the rotor end of the main shaft unit, or arranged on a separate unit, e.g. a tripod, placed in front of that end. The eyepiece may comprise another guiding structure configured to match the guiding structure of the first guiding element for calibrating the position and orientation of the telescope. The telescope may further comprise adjusting means, e.g. adjustment screws, for adjusting the position and/or orientation of the telescope.

According to a special embodiment, the alignment means further comprises at least a second guiding element configured to be positioned at least in one end of the other unit, wherein the second guiding element is configured to interact with the alignment source.

At least one second guiding element is positioned at the generator end and/or the rotor end of the main shaft unit. The second guiding element also comprises at least one guiding structure, e.g. a cross-hair, a graticule, a dot, a circle or another suitable guiding structure, located at the centre of the element. The guiding structure on the second guiding element may be the same as the one on the first guiding element. This allows for a quick and simple alignment of the main shaft unit and the gear unit without having to align the two units by eye, as it is difficult to determine by eye whether all ends of the two units are aligned correctly or not in the longitudinal direction.

The energy source, e.g. the light source, is configured to emit an energy beam, e.g. a light beam, towards the first and/or second guiding elements for aligning the main shaft unit and the gear unit. This allows the worker or workers to align the generator end and the rotor end correctly by using the energy beam as reference. Instead, the guiding structure on the eyepiece of the telescope may be used to align each generator end and rotor end optically.

In a very simplified embodiment, the alignment means may be a set of feelers used for aligning at least the interfaces of the main shaft and the gear unit.

The size and shape of the guiding elements correspond more or less to internal size and shape of the respective holes of the main shaft unit and the gear unit. Two second guiding elements may be placed at opposite ends of the main shaft unit for correct alignment with the gear unit.

An object of the invention is also achieved by a method for assembling a main shaft unit and a gear unit of a wind turbine, where the method comprising the steps of:
- positioning a gear unit in a gear frame unit of an assembly stand as described above, further positioning a main shaft unit in a main shaft frame unit of the assembly stand,
- aligning the positions of the main shaft unit and the gear unit with each other, and
- moving the main shaft unit and the gear unit into contact with each other, wherein at least the main shaft frame unit or the gear frame unit is arranged on a base frame.

This provides a simple and more accurate assembly method that eliminates the need for a crane to move the gear unit into position on the main shaft unit. The use of an assembly stand reduces the risk of damaging the contact surfaces as the relative movement between the two units can be controlled more accurately. Furthermore, the number of man-hours and workers required to complete the assembly process can also be reduced.

The pre-assembled or substantially pre-assembled main shaft unit and gear unit are initially loaded into the two frame units. The receiving means of each frame unit are brought into contact with the mounting elements intended for installing the units in the nacelle. The main shaft unit and/or the gear unit is then secured to the frame units by fastening means, such as bolts and nuts, to prevent any undesired movement during the assembly process. Alternatively, clamping elements, straps or other fastening means may be used to secure the main shaft unit and the gear unit to the frame units. The step of securing the main shaft unit and/or the gear unit may be done simultaneously with placing the units in the assembly stand if receiving means thereof are designed to keep the mounting elements of the main shaft unit and/or the gear unit in their position. Prior to loading the main shaft unit and the gear unit, the assembly stand may be reset, e.g. the lifting elements, the sliding elements and/or the seat may be placed in a predetermined position.

According to one embodiment, the main shaft unit and the gear unit both comprises a generator end and a rotor end, where the step of alignment comprises positioning an alignment source on or near one end of the main shaft unit or the gear unit, and calibrating the position of the alignment source relative to the position of that unit.

Prior to aligning the positions and/or orientations of the main shaft unit and the gear unit, the energy/light source is arranged on the generator end of the gear unit and a first guiding element is arranged at the rotor end of the gear unit. The energy/light source is mounted or fixed to the respective end so that it is positioned in front of the through hole of the generator end. The energy/light source may instead be arranged on the rotor end of main shaft unit. Alternatively, a telescope may be used instead of the energy/light source. This allows either one of the main shaft unit and the gear unit to be used as reference during the alignment process/step.

The position and/or orientation of the energy/light source is calibrated by emitting an energy/light beam onto the guiding structure located on a first guiding element arranged on the opposite end. Optionally, visual markings or a scale on the first guiding element may be used to determine the amount of adjustment needed. The amount of adjustment may be determined according to a look-up table. Adjustment means on the mounting structure are then used to calibrate the position and/or orientation of the energy/light source so that the energy/light beam is centred relative to the first guiding element. Other techniques may be used to calibrate the position and/or orientation of the energy/light source. After the calibration is completed, the first guiding element is removed. This allows for a simple and easy calibration as the light source is aligned with the orientation of the main shaft unit or gear unit.

If a telescope is used, then the step of calibration is done by placing the first guiding element on one or both ends of the main shaft unit or gear unit. The eyepiece is then used to optically centre the position and/or orientation of the telescope relative to the first guiding elements.

The energy/light source or telescopic sight may alternatively be arranged on a separate unit which in turn is positioned near the rotor end of the main shaft unit or the generator end of the gear unit. Another first guiding element may then be arranged on that end for calibrating the position and/orientation of the energy/light source or telescopic sight by using both first guiding elements.

According to a special embodiment, the step of alignment further comprises positioning at least one second guiding element on the generator end and/or the rotor end of the gear unit or the main shaft unit, and aligning the position of that unit with the position of the other unit.

The aligning is preferably carried out by using an energy/light source in the form of a laser emitting laser beam which is used for aligning the main shaft unit and the gear unit. Once the light source is calibrated, a second guiding element is arranged on either end or both ends of the main shaft unit. The position and/or orientation of the main shaft unit is then adjusted by using the adjustment means located on the main shaft frame unit until the energy/light source is centred relative to the second guiding elements. A guiding structure located on the second guiding elements may be used when adjusting the position of the generator end and/or the rotor end. The amount of adjustment may be determined by using visual markings or a scale on the second guiding elements. This guiding structure and markings/scale may be the same as the ones of the first guiding element. After the adjustment is completed, the second guiding elements are removed. This allows the main shaft to be aligned correctly with the gear unit by using the energy/light beam. The use of a light source and guiding elements provides a standardised way of aligning the main shaft unit and the gear unit.

If the light source and the first guiding element are located on the main shaft unit, then the second guiding elements are positioned on the gear unit instead.

The seat and thus the main shaft may be moved axially into an intermediate position before or after the calibration process and/or the adjustment process.

According to one embodiment, the position of at least one of the main shaft unit and the gear unit is adjusted in a vertical direction and/or in at least one horizontal direction by using lifting elements and/or sliding elements located on the respective frame unit.

During the alignment, the main shaft unit can be moved in a horizontal direction by operating the sliding elements located on the main shaft frame unit, while the gear unit can be moved in a vertical direction by operating the lifting elements located on the gear frame unit, or vice versa. Alternatively, the sliding and lifting elements may be located on both frame units or on only one frame unit, thus the main shaft unit and/or the gear unit are to be moved in both a vertical and a horizontal direction.

The worker is able to control the operation of the sliding elements and/or the lifting elements by using a control unit in the form of the control box. The control unit may be electrically connected to the drive unit or power unit of the adjustment means and/or the linear actuators for axially moving the seat. This connection may be a wireless or wired connection. The control unit comprises a user panel having suitable means for controlling the operation of the different adjustment means, such as push buttons, displays, touch screens, control levers, slide/rotary switches, or another suitable user operated control element.

In a special embodiment, the main shaft unit and/or the gear unit are further rotated around a horizontal or vertical rotation axis during alignment, the rotation axis extending parallel to the longitudinal direction of the assembly stand, parallel to the transverse direction of the assembly stand, or perpendicular to the longitudinal direction and the transverse direction of the assembly stand.

This increased the number of directions in which the main shaft and/or gear unit can be adjusted via the lifting elements and/or sliding elements located on the frame unit or units. Thereby allowing the main shaft and/or the gear unit to be offset, i.e. moved sideways, in a horizontal or vertical direction as well as rotated horizontally or vertically. The rotation may be controlled by operating the sliding elements and/or the lifting elements in groups/pairs or individually. The rotation of the main shaft unit and/or the gear unit may be done before or after the step of calibrating the alignment source.

In a special embodiment, the gear unit comprises an interface facing a matching interface of the main shaft unit, where the interface of the gear unit is heated to a predetermined temperature level prior to the step of moving or forced into contact with the matching interface after the step of moving.

Before installing the gear unit on the main shaft unit, the interface of the gear unit, e.g. the rotor end, is heated to a predetermined temperature level, thus enabling the receiving interface of the gear unit to expand to allow the opposite/matching interface of the main shaft unit to be moved into this expanded interface. The interface may be heated by using an external heating unit or a heating unit located on the assembly stand. Inductive heating elements may be placed on the interface for inductively heating the interface. Other types of heating elements may be used to heat up the interface. Optionally, the other interface may be cooled by using an external cooling unit or a cooling unit located on the assembly stand. The heating and/or cooling process may be controlled by the control unit or a local control unit.

After the heating process is completed or when the interface has reached the predetermined temperature level, the main shaft is moved into contact with the gear unit, or vice versa.

Alternatively, a shrink disc arrangement is activated after the main shaft is moved into contact with a shaft of the gear unit, or vice versa. Mechanical or hydraulic elements arranged in the shrink disc are activated to force an inner part thereof into contact with the main shaft unit. The on-board drive unit or power unit or an external unit may be used to activate these elements. This forces the main shaft and the gear shaft to form a tight fit so that torque and moments are transferred from the main shaft unit to the gear unit.

According to one embodiment, the step of moving comprises positioning a moveable unit at one end of the main shaft unit or the gear unit, and pushing or pulling the main shaft unit and the gear unit into contact with each other by using at least one pushing or pulling element located on the moveable unit.

The moveable unit is positioned at the generator end of the gear unit or at rotor end of the main shaft. The moveable unit is then mounted or fixed to that end and one or more linear actuators located on the moveable unit are then connected to the distal unit, e.g. the gear unit, via a wire or cable extending through the proximal unit, e.g. the main shaft unit. Alternatively, the wire or cable and thus the actuators may be connected to the frame unit, e.g. the base frame, of that distal unit instead. The rotor end of the gear unit may then be pulled over the generator end of the main shaft unit by retracting the actuators, thereby moving the moveable unit and the adjoining distal unit towards the proximal unit. This allows the linear actuators to act as pulling elements for pulling the main shaft unit and the gear unit into contact with each other.

The moveable unit may instead be mounted or fixed to the frame unit, e.g. the base frame, of the distal unit or the reference surface so that it remains stationary during the movement, e.g. by using an intermediate rod or bar. The linear actuators are in this configuration connected to an adjacent end of the distal unit, e.g. the main shaft unit. The generator end of the main shaft unit may then be pushed into the rotor end of the gear unit, thereby moving the adjoining distal unit towards the proximal unit, e.g. the gear unit. This allows the linear actuators to act as pushing elements for pushing the main shaft unit and the gear unit into contact with each other.

In alternative embodiment, the moveable unit may be omitted if the assembly stand comprises actuators connected to the seat for moving the seat. This allows the seat and thus the unit placed on the seat, e.g. the main shaft unit, to be moved into contact with the other unit, e.g. the gear unit, by operating the control box or the manual handle or wheel.

Once the gear unit is positioned correctly on the main shaft unit, the heating is turned off or the shrink disc is activated. If the heating is turned off prior to the step of moving, then the gear unit must be positioned correctly while the interface remains above a predetermined temperature level. The interface may then be cooled to ambient temperature by natural convection or forced cooling so that the inner contact surface of the rotor end of the gear unit is brought into contact with the outer contact surface of the generator end of the main shaft unit. This enables the two units to form a press-fit coupling or a shrink disc coupling.

### Description of the Drawing

The invention is described by example only and with reference to the drawings, wherein:
- Fig. 1: shows an exemplary embodiment of a wind turbine according to the invention;
- Fig. 2: shows an exemplary embodiment of an assembly stand according to the invention;
- Fig. 3: shows a moveable unit with a guide wire positioned relative to the assembly stand;
- Fig. 4: shows a light source arranged at a generator end of a gear unit;
- Fig. 5: shows a first guiding element arranged at a rotor end of the gear unit;
- Fig. 6: shows a second guiding element arranged at a rotor end of a main shaft unit;
- Fig. 7: shows the main shaft unit and the gear unit positioned in the assembly stand before the two units are moved together; and
- Fig. 8: shows the main shaft unit and the gear unit of fig. 7 in an assembled position.

In the following text, the figures will be described one by one and the different parts and positions seen in the figures will be numbered with the same numbers in the different figures. Not all parts and positions indicated in a specific figure will necessarily be discussed together with that figure.

### Reference list

- 1: Wind turbine
- 2: Wind turbine tower
- 3: Nacelle
- 4: Rotor hub
- 5: Wind turbine blades
- 6: Assembly stand
- 7: Main shaft frame unit
- 8: Receiving means of main shaft frame unit, footplates
- 9: Gear frame unit
- 10: Receiving means of gear unit, footplates
- 11: Base frame
- 12: Mounting elements, feet
- 13: Seat
- 14: Sliding tracks
- 15: Axial direction
- 16: Sliding elements
- 17: Transverse direction, sideways
- 18: Lifting elements
- 19: Vertical direction
- 20: Drive unit
- 21: Control unit
- 22: Moveable unit, wagon
- 23: Pulling element, actuator
- 24: Guide wire
- 25: Bracket
- 26: Alignment source, light source
- 27: Generator end
- 28: Gear unit
- 29: Adjustment means
- 30: First guiding element
- 31: Rotor end
- 32: Mounting interface for main shaft
- 33: Guiding structure, hole
- 34: Second guiding element
- 35: Rotor end
- 36: Main shaft unit
- 37: Guiding structure
- 38: Generator end
- 39: Mounting interface for gear unit
- 40: Reference surface

### Detailed Description of the Invention

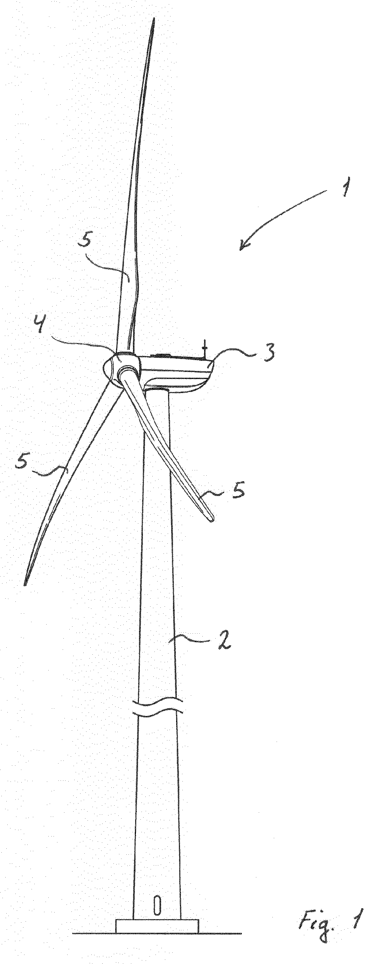

Fig. 1 shows an exemplary embodiment of a wind turbine 1 with a wind turbine tower 2 and a nacelle 3 arranged on top of the wind turbine tower 2. A yaw bearing (not shown) is arranged between the nacelle 3 and the wind turbine tower 2 allowing the nacelle 3 to yaw relative to the wind turbine tower 2 by using a yaw system. A rotor hub 4 is arranged relative to the nacelle 3, e.g. rotatably connected to a generator (not shown) inside the nacelle 3 via a rotation or main shaft. At least one wind turbine blade 5, preferably two or three, is mounted to the rotor hub 4. Each wind turbine blade 5 extends outwards from a centre of the rotor hub 4 and comprises a blade root and a tip end. The wind turbine blades 5 are here shown as full-span blades, but partial-pitchable blades may be used instead.

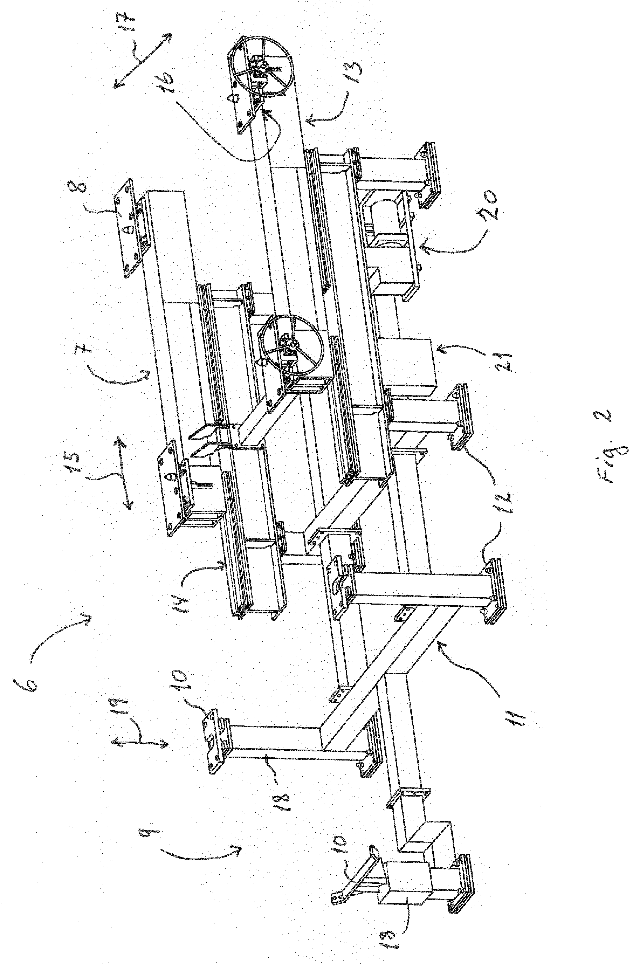

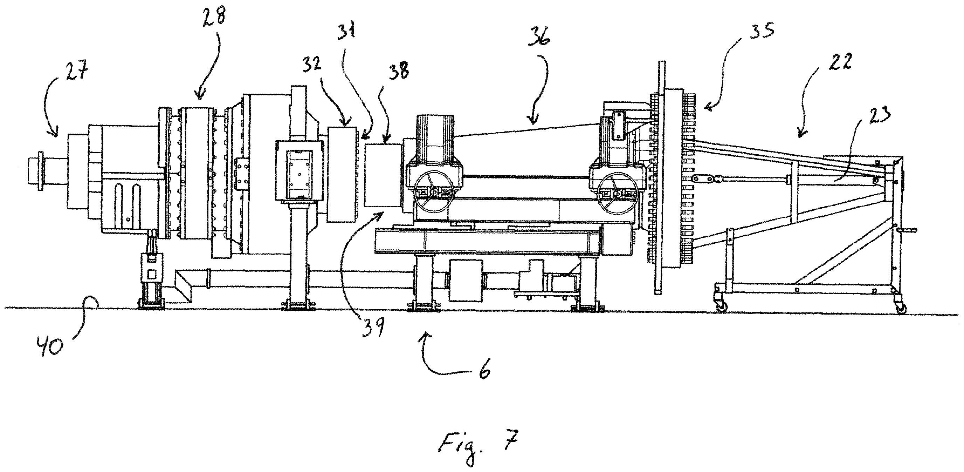

Fig. 2 shows an assembly stand 6 for assembling a main shaft unit (shown in figs. 7-8) and a gear unit (shown in figs. 7-8) of the wind turbine 1, where the main shaft unit and the gear unit is omitted for illustrative purposes.

The assembly stand 6 comprises a main shaft frame unit 7 having receiving means 8 in the form of footplates configured to be brought into contact with matching mounting elements (not shown) located on the main shaft unit. The assembly stand 6 further comprises a gear frame unit 9 having receiving means 10 in the form of footplates configured to be brought into contact with matching mounting elements (not shown) located on the gear unit.

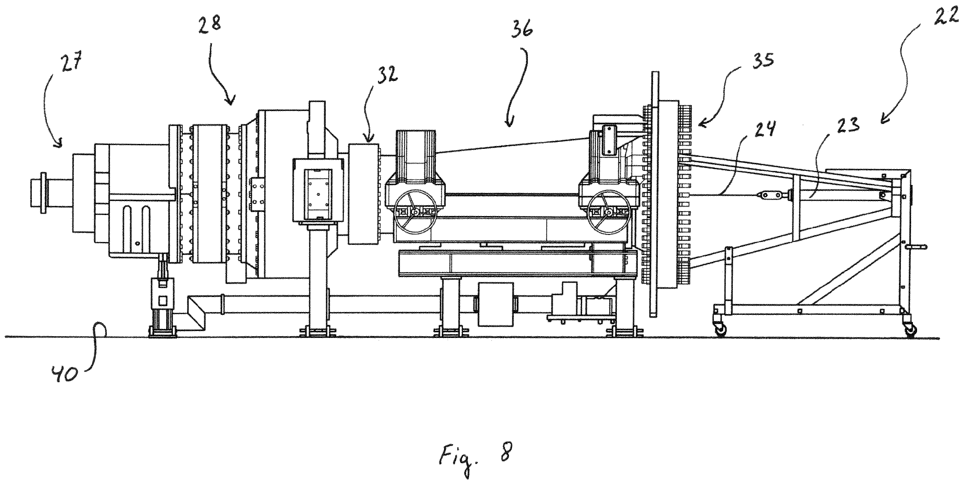

The main shaft frame unit 7 and the gear frame unit 9 are arranged on a base frame 11 configured to provide support for the frame units 7, 9. The base frame 11 comprises any number of mounting elements 12 in the form of feet, here seven is shown, configured to be mounted or fixed to a reference surface (shown in figs. 7 and 8). The base frame 11 defines a longitudinal direction and a transverse direction of the assembly stand 6 which define a horizontal plane of the assembly stand 6.

The main shaft unit 7 comprises a slidable seat 13 arranged on the base frame 11 on which the receiving means 8 for the main shaft unit is positioned. The seat 13 is moveably connected to the base frame 11 by at least two sliding tracks 14 extending parallel to the longitudinal direction of the assembly stand 6. The sliding tracks 14 allow the seat 13 and thus the main shaft unit to be moved in an axial direction (indicated by arrow 15). A locking mechanism (not shown) arranged relative to the seat 13 and/or the sliding tracks 14 is configured to lock the seat 13 in at least one predetermined position, e.g. an outermost position.

At least two sliding elements 16, e.g. screw units, are arranged on the seat 13 and configured to move/slide the main shaft unit in a transverse/sidewards direction (indicated by arrow 17). The sliding elements 16 are arranged between the receiving means 8 on one side of the seat 13 as shown, or optionally to the receiving means on both sides of the seat 13. The sliding elements 16 are connected to a hand wheel for manually operating the sliding elements 16.

The gear frame unit 9 comprises at least two lifting elements 18, here three is shown, configured to move the gear unit in a vertical direction (indicated by arrow 19). The vertical direction 19 is perpendicular to the longitudinal and transverse directions 15, 17 of the assembly stand 6. The lifting elements 18, e.g. jack-up units, are connected to a drive unit 20, e.g. a hydraulic power unit, configured to power the lifting elements 18. The drive unit 20 is electrically connected to a control unit 21 comprising a control box (not shown) via a wireless or wired connection. The control unit 21 is configured to control the operation of at least the lifting elements 18, e.g. individually or simultaneously.

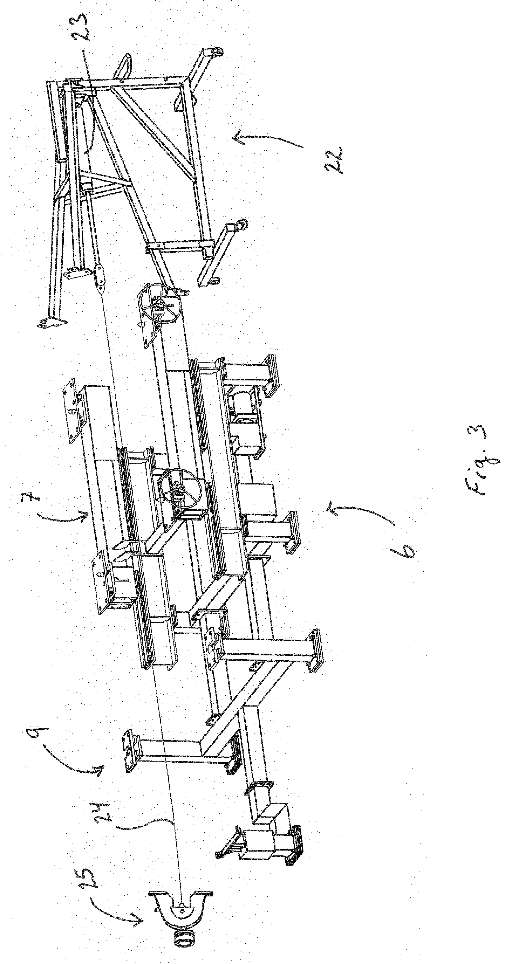

Fig. 3 shows a moveable unit 22 in the form of a wagon positioned in front of the main shaft frame unit 7. The moveable unit 22 comprises a frame structure having mounting elements for mounting to the rotor end of the main shaft unit. A pulling element 23 in the form of a linear actuator is arranged at the moveable unit 22 for moving the main shaft unit and the gear unit into contact with each other. The pulling element 23 is connected to a power unit (not shown) for powering the element 23. A guide wire 24 is connected to a coupling element, e.g. eye, located on the pulling element 23. The guide wire 24 is guided through a hole in both the main shaft unit and the gear unit as shown in figs. 7-8. A bracket 25 is connected to the guide wire 24 at the other end and comprises mounting elements for mounting it to the generator end of the gear unit.

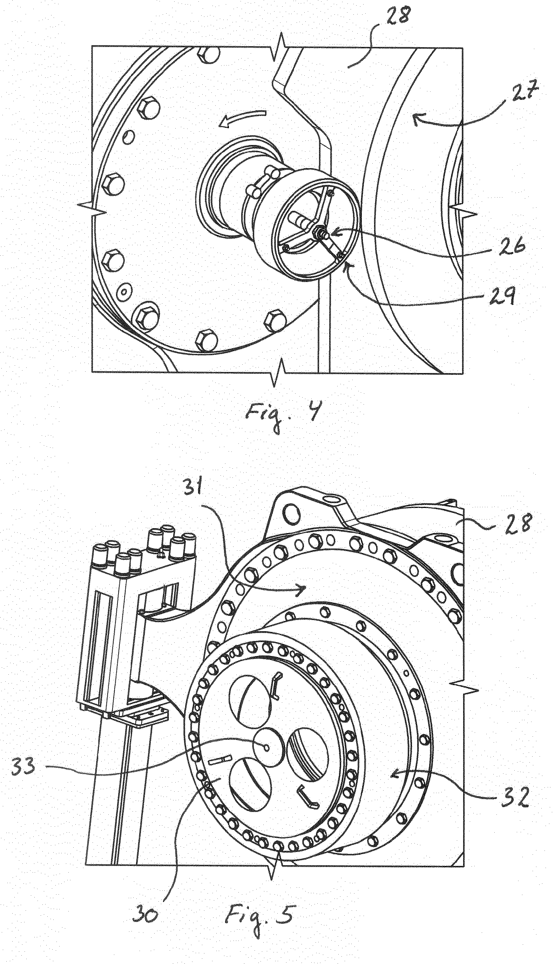

Fig. 4 shows an alignment source in the form of a light source 26 arranged at the generator end 27 of the gear unit 28. The light source 26 comprises mounting means for mounting it in front of the through hole (not shown) in the gear unit 28. The light source 26 has adjusting means 29 for adjusting the position and/orientation of the light source 26 relative to the position and/or orientation of the gear unit 28. The light source 26, e.g. a laser unit, is configured to emit a light beam, e.g. a laser beam, through the hole and into a central hole (not shown) of the main shaft unit.

Fig. 5 shows a removable first guiding element 30 arranged at the rotor end 31 of the gear unit 28. The size and shape of the first guiding element 30 corresponds more or less to the size and shape of the mounting interface 32 for the generator end of the main shaft unit. The first guiding element 30 comprises a guiding structure 33 in the form of a hole which is located at the centre of the opening of the interface 32.

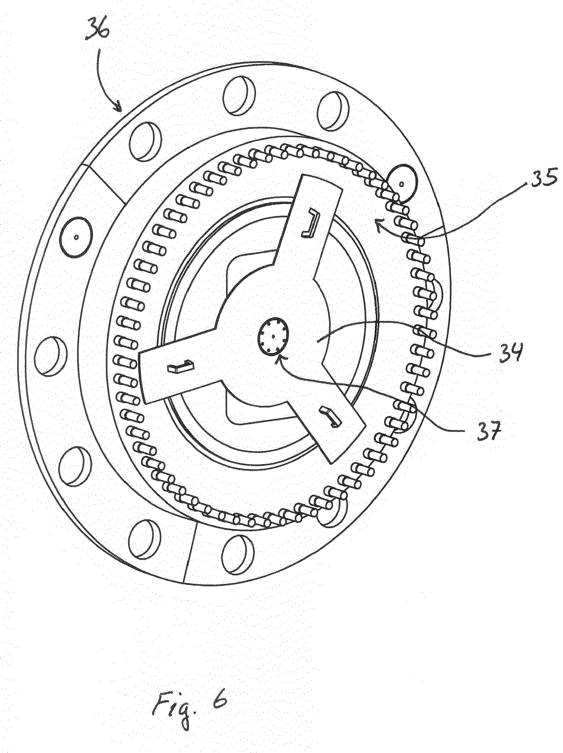

Fig. 6 shows a removable second guiding element 34 arranged at the rotor end 35 of the main shaft unit 36. Another second guiding element 34 (not shown) is optionally arranged at the generator end (shown in fig. 7-8) of the main shaft unit 36. The size and shape of the two second guiding elements 34 corresponds more or less to the size and shape of the mounting interface (shown in fig. 7-8) for the rotor end 31 of the gear unit 28 and/or for a generator end of a rotor hub (not shown). The second guiding element 34 comprises a guiding structure 37 in the form of a hole which is located at the centre of the opening of the mounting interface of the rotor end 35.

Fig. 7 shows the main shaft unit 36 and the gear unit 28 positioned in the assembly stand 6 shown in fig. 2. The seat 13 is positioned and locked in a predetermined position, e.g. the outermost position, by using the locking mechanism of the main shaft frame unit 7. In this position, the mounting interface 38 located on the generator end 39 of the main shaft unit 36 is spaced apart from the matching interface 32 of the rotor end 31 of the gear unit 28. The assembly stand 6 is fixed to the reference surface 40 using the mounting elements 12 of the base frame 11.

The main shaft unit 36 and the gear unit 28 are loaded onto the respective receiving means 8, 10 of the two frame units 7, 9 in a first step. Alternatively, the main shaft 36 is loaded after the calibration process of the light source 26 is completed.

The light source 26 is positioned in front of the trough hole of the gear unit 28 and mounted/fixed to the generator end 27. The first guiding element 30 is then positioned on the rotor end 31 of the gear unit 28. The light source 26 is activated and calibrated by using the adjustment means located on the light source 26. The position and/or orientation of the light source 26 are adjusted until the emitted light beam hits the centre of the guiding structure 33, thus the positions and/or orientations of the light source 26 and the gear unit 28 are aligned. The first guiding element 30 is optionally removed prior to aligning the position and/or orientation of the main shaft unit 36.

The main shaft unit 36 is optionally moved in the axial direction 15 to a second predetermined position in which the generator end 39 is located close to the rotor end 31 before or after the alignment process of the main shaft unit 36 is completed. The second position is located between the two end positions of the seat 13.

The second guiding element 34 is then positioned on the rotor end 35 of the main shaft unit 36. Optionally, another second guiding element 35 is positioned on the generator end 37. The position and/or orientation of the main shaft unit 36 is adjusted in a transverse direction 17 by using the sliding elements 16 of the main shaft frame unit 7. The position and/or orientation are adjusted until the emitted light beam hits the centre of the guiding structure 37, thus the positions and/or orientations of the gear unit 28 and the main shaft unit 36 are aligned. The light source 26 and the first and second guiding elements 30, 34 are removed prior to moving the main shaft unit 36 into contact with the gear unit 28.

The gear unit 28 is optionally adjusted in the vertical direction 19 by using the lifting elements 18 of the gear frame unit 9 before the calibration process or during the alignment process.

The movable unit 22 is then positioned in front of the rotor end 35 of the main shaft unit 36 and mounted to the rotor end 35. The guide wire 24 is guided through the holes of the main shaft unit 36 and the gear unit 28. The guide wire 24 is connected to the coupling element of the pulling element 23 and to the bracket 25. The bracket 25 is mounted to the generator end 27 of the gear unit 28. The locking mechanism of the main shaft frame unit 7 is released prior to activating the pulling element 23. The pulling element 23 is activated and the main shaft unit 36 is moved axially 15 until the mounting interface 38 of the generator end 39 comes into contact with the mounting interface 32 of the rotor end 31 by retracting the coupling element of the pulling element 23 as in fig. 8. The bracket 25, the guide wire 24 and the moveable unit 22 are then demounted and removed.

Finally, the interface 38 is installed onto the interface 32 by either activating a shrink disc arrangement (not shown) or by deactivating the heating unit (not shown) used to heat up the interface 32 prior to completing the movement process.

The present invention is not limited to the illustrated embodiment or the described embodiments herein, and may be modified or adapted without departing from the scope of the present invention as described in the patent claims below.

## Claims

1. An assembly stand for assembling a main shaft unit (36) and a gear unit (28) of a wind turbine (1), comprising:
- a gear frame unit (9) comprising receiving means (10) configured to receive and hold the gear unit (28),
- a main shaft frame unit (7) comprising receiving means (8) configured to receive and hold the main shaft unit (36), where at least one of the two frame units (7, 9) comprises adjustment means configured to move that frame unit relative to the other frame unit in at least one direction,
- alignment means for aligning the positions of the main shaft unit (36) and the gear unit (28) with each other, and
- means for moving one of the main shaft unit or gear unit into contact with the other unit, **characterised in that** at least the main shaft frame unit (7) or the gear frame unit (9) is arranged on a base frame (11) for positioning relative to a reference surface at ground level and not in the nacelle or on the main frame of the nacelle.

2. An assembly stand according to claim 1, **characterised in that** the base frame (11) comprises mounting means (12) for mounting to the reference surface or support elements for placement on the reference surface.

3. An assembly stand according to claim 1 or 2, **characterised in that** the adjustment means are lifting elements (18) connected to the receiving means (10) of at least one of the main shaft frame unit (7) and gear frame unit (9), e.g. the gear frame unit, wherein the lifting elements (18) are configured to move the main shaft unit (36) or gear unit (28) in at least a vertical direction (19).

4. An assembly stand according to any one of claims 1 to 3, **characterised in that** the adjustment means are sliding elements (16) connected to the receiving means (8) of at least one of the main shaft frame unit (7) and gear frame unit (9), e.g. the main shaft frame unit, wherein the sliding elements (16) are configured to move the main shaft unit (36) or gear unit (28) in at least one horizontal direction (17).

5. An assembly stand according to claim 3 or 4, **characterised in that** the assembly stand (1) further comprises at least one locking mechanism configured to lock at least the sliding elements (16) or the lifting elements (18) in one or more predetermined positions.

6. An assembly stand according to any one of claims 1 to 5, **characterised in that** the assembly stand (1) further comprises a moveable unit (22) having mounting elements configured to be mounted to matching mounting elements located on the main shaft unit (36) or the gear unit (28), the moveable unit (22) further comprises means for moving one of the units (28, 36), e.g. the main shaft unit, into contact with the other unit, e.g. the gear unit.

7. An assembly stand according to any one of claims 1 to 6, **characterised in that** the alignment means comprises an alignment source (26), e.g. an energy source or a telescopic sight, configured to be positioned at or near one end of the main shaft unit (36) or the gear unit (28), and at least one removable first guiding element (30) configured to be positioned at another end of the main shaft unit (36) or the gear unit (28), wherein the first guiding element (30) is configured to interact with the alignment source (26).

8. An assembly stand according to claim 7, **characterised in that** the alignment means further comprises at least a second guiding element (34) configured to be positioned at least one end of the other unit, wherein the second guiding element (34) is configured to interact with the alignment source (26).

9. A method for assembling a main shaft unit (36) and a gear unit (28) of a wind turbine (1), where the method comprising the steps of:
- positioning a gear unit (28) in a gear frame unit (9) of an assembly stand (6) according to any one the preceding claims, further positioning a main shaft unit (36) in a main shaft frame unit (7) of the assembly stand (6),
- aligning the positions of the main shaft unit (36) and the gear unit (28) with each other, and
- moving the main shaft unit (36) and the gear unit (28) into contact with each other, wherein at least the main shaft frame unit (7) or the gear frame unit (9) is arranged on a base frame (11) positioned relative to a reference surface at ground level and not in the nacelle or on the main frame of the nacelle.

10. A method according to claim 9, **characterised in that** the main shaft unit (36) and the gear unit (28) both comprises a generator end (27, 38) and a rotor end (31, 35), where the step of alignment comprises positioning an alignment source (26) on or near one end of the main shaft unit (36) or the gear unit (28), and calibrating the position of the alignment source (26) relative to the position of that unit.

11. A method according to claim 10, **characterised in that** the step of alignment further comprises positioning at least one second guiding element (34) on the generator end (27, 38) and/or the rotor end (31, 35) of the gear unit (28) or the main shaft unit (36), and aligning the position of that unit with the position of the other unit.

12. A method according to any one of claims 9 to 11, **characterised in that** the position of at least one of the main shaft unit (36) and the gear unit (28) is adjusted in a vertical direction (19) and/or in at least one horizontal direction (17) by using lifting elements (18) and/or sliding elements (16) located on the respective frame unit (7, 9).

13. A method according to any one of claims 9 to 12, **characterised in that** the step of moving comprises positioning a moveable unit (22) at one end of the main shaft unit (36) or the gear unit (28), and pushing or pulling the main shaft unit (36) and the gear unit (28) into contact with each other by using at least one pushing or pulling element (23) located on the moveable unit (22).

## Patentansprüche

1. Montageständer zum Zusammenbauen einer Hauptwelleneinheit (36) und einer Getriebeeinheit (28) einer Windkraftanlage (1), umfassend:
- eine Getrieberahmeneinheit (9) mit einer Aufnahmeeinrichtung (10) zum Aufnehmen und Halten der Getriebeeinheit (28),
- eine Hauptwellenrahmeneinheit (7) mit einer Aufnahmeeinrichtung (8), die dazu konfiguriert ist, die Hauptwelleneinheit (36) aufzunehmen und zu halten, wobei wenigstens eine der zwei Rahmeneinheiten (7, 9) Einstellmittel aufweist, die dazu konfiguriert sind, diese Rahmeneinheit relativ zur anderen Rahmeneinheit in mindestens einer Richtung zu bewegen,
- Ausrichtmittel zum Ausrichten der Positionen der Hauptwelleneinheit (36) und der Getriebeeinheit (28) zueinander und
- Mittel, um entweder die Hauptwelleneinheit oder die Getriebeeinheit durch Bewegung mit der anderen Einheit in Kontakt zu bringen, **dadurch gekennzeichnet, daß** zumindest die Hauptwellenrahmeneinheit (7) oder die Getrieberahmeneinheit (9) auf einem Grundrahmen (11) angeordnet ist zur Positionierung relativ zu einer Referenzfläche auf Bodenhöhe und nicht in der Nazelle oder am Hauptrahmen der Nazelle.

2. Montageständer nach Anspruch 1, **dadurch gekennzeichnet, daß** der Grundrahmen (11) Befestigungsmittel (12) zur Befestigung an der Referenzfläche oder Stützelemente zur Anordnung auf der Referenzfläche aufweist.

3. Montageständer nach Anspruch 1 oder 2, **dadurch gekennzeichnet, daß** die Einstellmittel Hebeelemente (18) sind, die mit den Aufnahmemitteln (10) von mindestens einer der Hauptwellenrahmeneinheit (7) und der Getrieberahmeneinheit (9) verbunden sind, z.B. mit der Getrieberahmeneinheit, wobei die Hebeelemente (18) dazu konfiguriert sind, die Hauptwelleneinheit (36) oder die Getriebeeinheit (28) in mindestens einer vertikalen Richtung (19) zu bewegen.

4. Montageständer nach einem der Ansprüche 1 bis 3, **dadurch gekennzeichnet, daß** die Einstellmittel Gleitelemente (16) sind, die mit den Aufnahmemitteln (8) von mindestens einer der Hauptwellenrahmeneinheit (7) und Getrieberahmeneinheit (9) verbunden sind, z.B. mit der Hauptwellenrahmeneinheit, wobei die Gleitelemente (16) konfiguriert sind, um die Hauptwelleneinheit (36) oder die Getriebeeinheit (28) in mindestens einer horizontalen Richtung (17) zu bewegen.

5. Montageständer nach Anspruch 3 oder 4, **dadurch gekennzeichnet, daß** der Montageständer (1) ferner mindestens einen Verriegelungsmechanismus umfasst, der dazu eingerichtet ist, mindestens die Gleitelemente (16) oder die Hebeelemente (18) in einem oder mehreren zu vorbestimmte Positionen zu verriegeln.

6. Montageständer nach einem der Ansprüche 1 bis 5, **dadurch gekennzeichnet, daß** der Montageständer (1) ferner eine bewegbare Einheit (22) mit Montageelementen aufweist zur Montage an passenden Montageelementen auf der Hauptwelleneinheit ( 36) oder der Getriebeeinheit (28), wobei die bewegliche Einheit (22) ferner Mittel zum Bewegen einer der Einheiten (28, 36), z.B. der Hauptwelleneinheit, in Kontakt mit der anderen Einheit, z.B. die Getriebeeinheit.

7. Montageständer nach einem der Ansprüche 1 bis 6, **dadurch gekennzeichnet, daß** die Ausrichtmittel eine Ausrichtquelle (26) umfassen, z.B. eine Energiequelle oder ein Zielfernrohr, zum Positionieren an oder nahe einem Ende der Hauptwelleneinheit (36) oder der Getriebeeinheit (28) und mindestens ein entfernbares erstes Führungselement (30) zum Positionieren an einem anderen Ende der Hauptwelleneinheit (36) oder der Getriebeeinheit (28), wobei das erste Führungselement (30) dazu konfiguriert ist, mit der Ausrichtquelle (26) zusammenzuwirken.

8. Montageständer nach Anspruch 7, **dadurch gekennzeichnet, daß** die Ausrichtmittel ferner mindestens ein zweites Führungselement (34) umfassen zum Positionieren an mindestens einem Ende der anderen Einheit, wobei das zweite Führungselement (34) konfiguriert ist mit der Ausrichtungsquelle (26) zu interagieren.

9. Verfahren zum Montieren einer Hauptwelleneinheit (36) und einer Getriebeeinheit (28) einer Windenergieanlage (1), wobei das Verfahren die Schritte umfasst:
- Positionieren einer Getriebeeinheit (28) in einer Getrieberahmeneinheit (9) eines Montageständers (6) nach einem der vorhergehenden Ansprüche, ferner Positionieren einer Hauptwelleneinheit (36) in einer Hauptwellenrahmeneinheit (7) des Montageständers (6),
- Ausrichten der Positionen der Hauptwelleneinheit (36) und der Getriebeeinheit (28) zueinander und
- Bewegen der Hauptwelleneinheit (36) und der Getriebeeinheit (28) in Kontakt miteinander, wobei zumindest die Hauptwellenrahmeneinheit (7) oder die Getrieberahmeneinheit (9) an einem Grundrahmen (11) angeordnet ist, der relativ zu einer Referenzfläche auf Bodenhöhe positioniert ist und nicht in der Gondel oder am Hauptrahmen der Gondel.

10. Verfahren nach Anspruch 9, **dadurch gekennzeichnet, daß** die Hauptwelleneinheit (36) und die Getriebeeinheit (28) beide ein Generatorende (27, 38) und ein Rotorende (31, 35) aufweisen, wobei der Schritt des Ausrichtens das Positionieren einer Ausrichtungsquelle (26) an oder nahe einem Ende der Hauptwelleneinheit (36) oder der Getriebeeinheit (28) und das Kalibrieren der Position der Ausrichtungsquelle (26) relativ zu der Position dieser Einheit umfasst.

11. Verfahren nach Anspruch 10, **dadurch gekennzeichnet, daß** der Schritt des Ausrichtens weiterhin das Positionieren mindestens eines zweiten Führungselements (34) am Generatorende (27, 38) und / oder am Rotorende (31, 35) des Getriebeeinheit (28) oder die Hauptwelleneinheit (36) und Ausrichten der Position dieser Einheit mit der Position der anderen Einheit umfasst.

12. Verfahren nach einem der Ansprüche 9 bis 11, **dadurch gekennzeichnet, daß** die Position von mindestens einer der Hauptwelleneinheit (36) und der Getriebeeinheit (28) in einer vertikalen Richtung (19) und / oder in mindestens einer horizontalen Richtung (17) unter Verwendung von an der jeweiligen Rahmeneinheit (7, 9) angeordneten Hubelementen (18) und / oder Gleitelementen (16) eingestellt wird.

13. Verfahren nach einem der Ansprüche 9 bis 12, **dadurch gekennzeichnet, daß** der Schritt des Bewegens folgendes umfasst: das Positionieren einer bewegbaren Einheit (22) an einem Ende der Hauptwelleneinheit (36) oder Getriebeeinheit (28) und das Schieben oder Ziehen der Hauptwelleneinheit (36) und der Getriebeeinheit (28) in Kontakt miteinander unter Verwendung von mindestens einem Schub- oder Zugelement (23), das an der beweglichen Einheit (22) angeordnet ist.

## Revendications

1. Support d'assemblage pour assembler une unité arbre principal (36) et une unité engrenage (28) d'une éolienne (1), comprenant :
- une unité cadre d'engrenage (9) comprenant des moyens de réception (10) configurés pour recevoir et maintenir l'unité engrenage (28),
- une unité cadre d'arbre principal (7) comprenant des moyens de réception (8) configurés pour recevoir et maintenir l'unité arbre principal (36), où au moins l'une des deux unités cadre (7, 9) comprend des moyens de réglage configurés pour déplacer ladite unité cadre par rapport à l'autre unité cadre dans au moins une direction,
- des moyens d'alignement pour aligner les positions de l'unité arbre principal (36) et de l'unité engrenage (28) l'une avec l'autre, et
- des moyens pour déplacer l'une de l'unité arbre principal ou de l'unité engrenage pour la mettre en contact avec l'autre unité, **caractérisé en ce qu'**au moins l'unité cadre d'arbre principal (7) ou l'unité cadre d'engrenage (9) est agencée sur un cadre de base (11) pour un positionnement par rapport à une surface de référence au niveau du sol mais ni dans la nacelle ni sur le cadre principal de la nacelle.

2. Support d'assemblage selon la revendication 1, **caractérisé en ce que** le cadre de base (11) comprend des moyens de montage (12) pour le montage sur la surface de référence ou des éléments de support pour un placement sur la surface de référence.

3. Support d'assemblage selon la revendication 1 ou 2, **caractérisé en ce que** les moyens de réglage sont des éléments de levage (18) reliés aux moyens de réception (10) d'au moins l'une de l'unité cadre d'arbre principal (7) et de l'unité cadre d'engrenage (9), par exemple l'unité cadre d'engrenage, dans lequel les éléments de levage (18) sont configurés pour déplacer l'unité arbre principal (36) ou l'unité engrenage (28) dans au moins une direction verticale (19).

4. Support d'assemblage selon l'une quelconque des revendications 1 à 3, **caractérisé en ce que** les moyens de réglage sont des éléments coulissants (16) reliés aux moyens de réception (8) d'au moins l'une de l'unité cadre d'arbre principal (7) et de l'unité cadre d'engrenage (9), par exemple l'unité cadre d'arbre principal, dans lequel les éléments coulissants (16) sont configurés pour déplacer l'unité arbre principal (36) ou l'unité engrenage (28) dans au moins une direction horizontale (17).

5. Support d'assemblage selon la revendication 3 ou 4, **caractérisé en ce que** le support d'assemblage (1) comprend en outre au moins un mécanisme de verrouillage configuré pour verrouiller au moins les éléments coulissants (16) ou les éléments de levage (18) dans une ou plusieurs positions prédéterminées.

6. Support d'assemblage selon l'une quelconque des revendications 1 à 5, **caractérisé en ce que** le support d'assemblage (1) comprend en outre une unité mobile (22) ayant des éléments de montage configurés pour être montés sur des éléments de montage correspondants situés sur l'unité arbre principal (36) ou l'unité engrenage (28), l'unité mobile (22) comprend en outre des moyens pour déplacer l'une des unités (28, 36), par exemple l'unité arbre principal, pour la mettre en contact avec l'autre unité, par exemple l'unité engrenage.

7. Support d'assemblage selon l'une quelconque des revendications 1 à 6, **caractérisé en ce que** les moyens d'alignement comprennent une source d'alignement (26), par exemple une source d'énergie ou une mire télescopique, configurée pour être positionnée à une extrémité ou près d'une extrémité de l'unité arbre principal (36) ou de l'unité engrenage (28), et au moins un premier élément de guidage amovible (30) configuré pour être positionné à une autre extrémité de l'unité arbre principal (36) ou de l'unité engrenage (28), dans lequel le premier élément de guidage (30) est configuré pour interagir avec la source d'alignement (26).

8. Support d'assemblage selon la revendication 7, **caractérisé en ce que** les moyens d'alignement comprennent en outre au moins un second élément de guidage (34) configuré pour être positionné à au moins une extrémité de l'autre unité, dans lequel le second élément de guidage (34) est configuré pour interagir avec la source d'alignement (26).

9. Procédé d'assemblage d'une unité arbre principal (36) et d'une unité engrenage (28) d'une éolienne (1), dans lequel le procédé comprend les étapes :
- de positionnement d'une unité engrenage (28) dans une unité cadre d'engrenage (9) d'un support d'assemblage (6) selon l'une quelconque des revendications précédentes, le positionnement en outre d'une unité arbre principal (36) dans une unité cadre d'arbre principal (7) du support d'assemblage (6),
- d'alignement des positions de l'unité arbre principal (36) et de l'unité engrenage (28) l'une avec l'autre, et
- de déplacement de l'unité arbre principal (36) et de l'unité engrenage (28) pour les mettre en contact l'une avec l'autre, dans lequel au moins l'unité cadre d'arbre principal (7) ou l'unité cadre d'engrenage (9) est agencée sur un cadre de base (11) positionné par rapport à une surface de référence au niveau du sol mais ni dans la nacelle ni sur le cadre principal de la nacelle.

10. Procédé selon la revendication 9, **caractérisé en ce que** l'unité arbre principal (36) et l'unité engrenage (28) comprennent toutes deux une extrémité de générateur (27, 38) et une extrémité de rotor (31, 35), dans lequel l'étape d'alignement comprend le positionnement d'une source d'alignement (26) à une extrémité ou près d'une extrémité de l'unité arbre principal (36) ou de l'unité engrenage (28), et l'étalonnage de la position de la source d'alignement (26) par rapport à la position de ladite unité.

11. Procédé selon la revendication 10, **caractérisé en ce que** l'étape d'alignement comprend en outre le positionnement d'au moins un second élément de guidage (34) sur l'extrémité de générateur (27, 38) et/ou l'extrémité de rotor (31, 35) de l'unité engrenage (28) ou de l'unité arbre principal (36), et l'alignement de la position de ladite unité avec la position de l'autre unité.

12. Procédé selon l'une quelconque des revendications 9 à 11, **caractérisé en ce que** la position d'au moins l'une de l'unité arbre principal (36) et de l'unité engrenage (28) est réglée dans une direction verticale (19) et/ou dans au moins une direction horizontale (17) à l'aide d'éléments de levage (18) et/ou d'éléments coulissants (16) situés sur l'unité cadre respective (7, 9).

13. Procédé selon l'une quelconque des revendications 9 à 12, **caractérisé en ce que** l'étape de déplacement comprend le positionnement d'une unité mobile (22) à une extrémité de l'unité arbre principal (36) ou de l'unité engrenage (28), et la poussée ou la traction de l'unité arbre principal (36) et de l'unité engrenage (28) pour les mettre en contact l'une avec l'autre à l'aide d'au moins un élément de poussée ou de traction (23) situé sur l'unité mobile (22).
